**Europäisches Patentamt**

**European Patent Office**

**Office européen des brevets**

(19)

(11) Publication number: **0 061 075**
**A1**

(12) # EUROPEAN PATENT APPLICATION

(21) Application number: **82101941.1**

(22) Date of filing: **11.03.82**

(51) Int. Cl.³: **B 23 B 31/04**
**B 23 Q 3/12**

(30) Priority: **17.03.81 IT 2895981 U**

(43) Date of publication of application:
**29.09.82 Bulletin 82/39**

(84) Designated Contracting States:
**CH DE FR GB LI NL SE**

(71) Applicant: **Utensileria Sassolese S.a.s. di Casanova
Emilio - Liverani Edgardo & C.
Circonvallazione Sud Est 181/3 5
I-41049 Sassuolo (Modena)(IT)**

(72) Inventor: **Liverani, Edgardo
Via Secchia, 9
I-41050 Colombaro Modena(IT)**

(74) Representative: **Modiano, Guido et al,
MODIANO & ASSOCIATI S.A.S. Via Meravigli, 16
I-20123 Milan(IT)**

(54) Selfcentering device for attaching tools to the spindle of a machine tool.

(57) The selfcentering device comprises a connector having a tapering end for insertion in the machine spindle and frontally provided with a seat for centering relatively to the shank (4) of an adapter element (3), the shank being frusto-conical externally and provided at the base with a circumferential undercut groove (7).

At the shank base portion the adapter (3) defines a ring-like surface (5) adapted to abut against the corresponding front surface of the connector and the seat of the connector defines a frusto-conical mouth adapted to accommodate therein the shank (4) of the adapter (3).

Thus, the tool bit can be coupled with high rigidity and perfect axial alignment and easily and rapidly detached and replaced.

fig. 3

EP 0 061 075 A1

This invention relates to a self-centering device for attaching tools    to the spindle of a machine tool.

It is a known fact that machine tools, such as milling machines, honing machines, and mill-honing machines, utilize special conically tapered connectors of standard sizes which, when mounted coaxially with the mandrel, enable the connection of different types of tool bits for the various roughing and finishing operations.

Also known is that, for the purpose of increasing the range of different tools which can be mounted in the mandrel, adapters are utilized, such as extensions, step-down and step-up adapters  which, when coupled with the conical holder or connector, afford a high versatility for the machine tool and many possible combinations of a limited number of standard connectors with a wide range of tool bits.

The main drawback  of such prior devices is that the axial mounting of such components is limited, and during the machining operations there originate tolerance errors which are due to the non-coaxial arrangement of the tool bits relatively to the spindle.

Moreover, if the coupling of the connectors or mounts, adapters, and tool bits is accomplished with minimal radial tolerances, demounting becomes an extremely difficult operation that the operator is to carry out with great care, if the mutual "jamming " of the components is to be avoided.

Accordingly the task of the invention is to remedy the deficiencies listed hereinabove by providing a selfcentering device for attaching tool bits to the spindle of a machine tool, which affords the utmost versatility of operation of such machines through a coupling of high rigidity and perfect axial alignement, and whereby the tool bit can be easily and rapidly detached and replaced.

This task is achieved by a selfcentering device for attaching tools to the spindle of machine tools, comprising a connector adapted for insertion in the machine spindle at an externally frustoconical connector end, and frontally provided with a seat for centering relatively to the shank of an adapter element having a throughgoing threaded hole for the threaded engagement of a screw therewith coaxially with said seat, characterized in that said shank is frusto-conical externally and that, at the base of said shank, said adapter defines a ring-like surface adapted to abut against the corresponding front surface of said connector.

Further features will be more clearly understood from the following detailed description, with reference to the accompanying drawings, where:

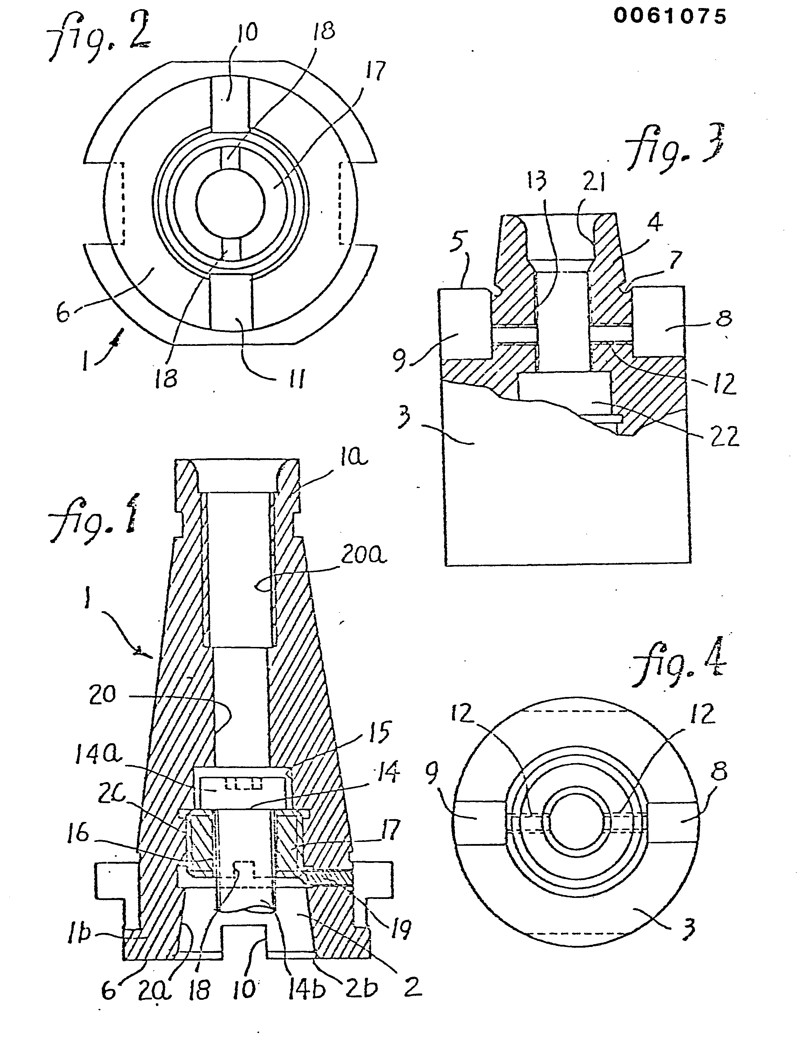

Figure 1 is a sectional side view of a connector or mount for a machine tool spindle;

Figure 2 is a corresponding axial view of the connector or mount of Figure 1;

Figure 3 is a partly cutaway side view of a tool holding adapter element for coupling with the connector of Figure 1; and

Figure 4 is a corresponding plan view of the adapter of Figure 3.

With particular reference to the drawing figures, there is indicated at 1 a connector which, at an externally frusto-conical end 1a, can be attached to the spindle of a machine tool of the type of a milling machine, honing machine, or mill-honing machine.

At the opposite end 1b, the connector or mount 1 is provided with a frontally located coaxial seat 2 for centering relatively to a tool holding adapter element 3.

At the terminal portion, the seat 2 defines a frusto-conical mouth 2a adapted for accommodating a frustoconical shank 4 of the adapter 3 therein.

The shank 4 extends coaxially with the top of the substantially cylindrical body of the adapter 3, which has, at the base of the shank 4, a ring-like surface 5 adapted for shimming with respect to the corresponding front surface 6 of the connector 1.

The numeral 7 designates an undercut groove which is formed at the base of the shank 4 for obtaining an accurate machining of the abutment or detent surface 5 and a tapering of the shank 4 which conforms with minimum tolerance requirements.

The same amount of conical taper is provided for the mouth 2a of the seat 2, the edge whereof has a bevel 2b formed thereon for perfect alignment with said seat.

Radially formed in the surface 6, at a diametrically opposed position, are cutouts 8 and 9 adapted for accommodating respective drive keys, not shown, which are adapted to engage in corresponding radial recesses 10 and 11 of the connector 1.

At 12, there are indicated threaded holes for the fastening screws of said keys, which have a suitably different width dimension in order to allow the adapter 3 and connector 1 to be coupled together at a single relative angular position.

The adapter 3 has an axially throughgoing threaded hole 13 for thread engagement by a screw 14 of the Allen type, which is carried on the inside of the seat 2.

The head 14a of the screw 14 is arranged in a housing 15 at the bottom of the seat 2, and the shank 14b is led axially into a coaxial hole 16 of a ring nut 17 which is threaded into a threaded portion 2c of the seat 2. The reference numeral 18 designates radial cutouts for threading the ring nut 17, which is retained in a fixed axial position by means of a set screw 19.

At 20 is indicated a throughgoing hole, drilled axially along the connector 1 and through which a wrench can be inserted for tightening the screw 14.

At the end 1a, the hole 20 has a threaded portion 20a for coupling with the spindle of the machine tool, while at the shank 4, the hole 13 defines a widening portion 21. At the opposite end, the adapter 3 has a coaxial seat 22, which is variously configured in accordance with the type of tool wherefor the adapter is intended.

The device according to this invention is simple and effective in operation. The shank 4 of the adapter 3 which carries the tool bit is inserted through the mouth 2a in a correct relative angular position such that the keys of the adapter 3 are received in the respective cutouts 10 and 11 of the connector 1. The taper of the shank 4 and mouth 2a enable a perfect alignment of the adapter 3 and connector or mount 1. Then, the wrench is inserted through the hole 20 and the screw 14 in the hole 13 is tightened. During the tightening step, the head 14a will abut against the ring nut 17 and the shank 14b, which is arranged to operate in tension, applies to the adapter 3 an axial action tending to pull the shank 4 into the seat 2 until the surfaces 5 and 6 are pressed into mutual contact.

It should be noted, moreover, that thanks to the widening 21 and to the cutout effect of the groove 7, the shank 4 is forced into the seat 2 and undergoes a radial deformation which makes the connector 1 and adapter 3 rigid together.

Furthermore, the contact between the surfaces 5 and 6 allows an adequate rigidity as well as perfect axial centering.

Finally, to separate the adapter 3 from the connector 1, the screw 14 is rotated in the opposite direction until the head 14a, in sliding axially through the seat 2, abuts against the bottom of said seat. By turning the screw 14 further, the shank 14b is caused to exert an axial action tending to move the shank 4 away from the seat 2.

It has been found in actual practice that the invention achieves its object; in particular, through the utilization of different types of adapters 3, it becomes possible to easily and rapidly attach to the spindle a variety of tool bits for any type of machining operations.

It should be noted that the use of two drive keys allows the coupling to the connector or mount 1 of adapters with substantially different diameters from the outside diameter of the connector 1.

In practicing the invention, many modifications and variations thereof are possible; thus, for example, the ring nut 17 may be located by means of lockrings.

## CLAIMS

1. A selfcentering device for attaching tools to the spindle of machine tools, comprising a connector (1) adapted for insertion in the machine spindle at an externally frustoconical connector end (1a), and frontally provided with a seat (2) for centering relatively to the shank (4) of an adapter element (3) having a throughgoing threaded hole (13) for the threaded engagement of a screw (14) therewith coaxially with said seat (2), characterized in that said shank (4) is frusto-conical externally, and that, at the base of said shank, said adapter (3) defines a ring-like surface (5) adapted to abut against the corresponding front surface (6) of said connector (1).

2. A selfcentering device according to Claim 1, characterized in that at the end portion of said seat (2) there is defined a frusto-conical mouth (2a) the taper whereof at least in use substantially matches the taper of said shank (4).

3. A device according to Claim 1, characterized in that at the base of said shank (4) there is formed a circumferential undercut groove (7) adapted to impart to said shank (4) adequate mechanical elasticity.

4. A selfcentering device for attaching tools to the spindle of machine tools, substantially as herein described and illustrated.

fig. 2

fig. 3

fig. 1

fig. 4

0061075

**European Patent Office**

## EUROPEAN SEARCH REPORT

Application number

EP 82 10 1941.1

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| X | CH - A - 265 579 (VERWALTUNGSGESELL-SCHAFT DER WERKZEUGMASCHINENFABRIK OERLIKON) * page 2, lines 14 to 25; fig. 1 * | 1,2 | B 23 B   31/04 B 23 Q    3/12 |
| X | GB - A - 927 223 (F. GUYLEE & SON LTD.) * claims 1, 2; page 1, line 81 to page 2, line 38; fig. 1, 2 * | 1,2 | |
| A | DE - A1 - 2 541 123 (B. KOCH) | | TECHNICAL FIELDS SEARCHED (Int.Cl. ³) |
| A | EP - A1 - 0 015 248 (SANDVIK AB) | | B 23 B   29/00 B 23 B   31/00 |
| A | Patent Abstracts of Japan Vol. 4, No. 99, 16. July 1980 page 140M21 & JP - A - 55 - 58937 | | B 23 B   51/12 B 23 C    5/26 B 23 Q    3/12 |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| Place of search Berlin | Date of completion of the search 08-06-1982 | Examiner MARTIN |

EPO Form 1503.1   06.78